# EUROPÄISCHE PATENTSCHRIFT

(11) **EP 0 785 328 B1**
(45) Veröffentlichungstag und Bekanntmachung des Hinweises auf die Patenterteilung: **16.05.2001**
(21) Anmeldenummer: 96120975.6
(22) Anmeldetag: 28.12.1996
(51) Int. Cl.: E05B 67/00, E05B 67/36

(54) **Schlossvorrichtung, insbesondere für Zweiradfahrzeuge**
Locking device, particularly for two-wheeled vehicle
Dispositif de verrouillage, notamment pour véhicule à deux roues

(30) Priorität: 16.01.1996 DE 19601343
(43) Veröffentlichungstag der Anmeldung: 23.07.1997
(73) Patentinhaber: Trelock GmbH, 48301 Nottuln (DE)
(72) Erfinder: Kortenbrede, Ludger, 48291 Telgte (DE)
(74) Vertreter: Fay, Hermann, Dipl.-Phys. Dr.

(56) Entgegenhaltungen:
- DE-A- 4 017 122
- FR-A- 2 540 171
- US-A- 4 347 720

## Beschreibung

Die Erfindung betrifft eine Schloßvorrichtung, insbesondere für Zweirad-Fahrzeuge, aufweisend
- ein abschließbares Schließkabel,
- eine Anschlußeinheit mit einem Steckerteil, in das eine Ausnehmung eingebracht ist,
- einen Schloßkörper mit einer verstellbaren Rasteinrichtung, durch die wenigstens ein sphärisch ausgebildeter Rastkörper, der in der Ausnehmung des Steckerteils angeordnet ist, festlegbar oder freigebbar ist,
- welche Rasteinrichtung einen zylinderförmig ausgebildeten Schließhohlkörper und einen den Schließhohlkörper wenigstens teilweise umgebenden Verstellkörper, der aus wenigstens einem Drehhohlkörper besteht, aufweist,
- wobei der Schließhohlkörper an einem Ende mit einem ersten Schließkabelende des Schließkabels verbunden ist, am entgegengesetzten Ende mit wenigstens einer Auflageausnehmung versehen ist, die den sphärisch ausgebildeten Rastkörper wenigstens teilweise hält,
- ein Schließwerk mit Schließzylinder zwischen den Enden des Schließhohlkörpers,
- wenigstens eine Aufnahmeausnehmung im Drehhohlkörper,
- wobei der Drehhohlkörper und der Schließhohlkörper zueinander so verstellbar sind, daß die Aufnahmeausnehmung über der Auflageausnehmung positionierbar ist, so daß bei einer Ausziehbewegung des Steckerteils der Rastkörper das Steckerteil freigibt oder daß die Aufnahmeausnehmung und die Auflageausnehmung zueinander versetzbar sind, so daß durch den Rastkörper das Steckerteil im Schließhohlkörper gehalten ist, und
- wobei der Schließzylinder mit einem durch einen eingeführten Schlüssel beweglichen, einem Frontplattenelement des Schließzylinders gegenüberliegenden Sicherheitskörper ausgestattet ist.

Eine Schloßvorrichtung der eingangs genannten Art ist aus der US-A-4 347 720 bekannt. Sie besteht aus einem Gehäusekörper, auf dem ein Sattelkörper aufgelegt und zu beiden Seiten des Sattelkörpers jeweils ein Rohrkörper aufgeschoben ist. Die beiden Rohrkörper und der Sattelkörper sind von einem Mantelkörper umgeben. In den Gehäusekörper und in jeden Rohrkörper sind sich gegenüberliegende Ausnehmungen eingebracht, die Kugeln aufnehmen. Der Mantelkörper weist von den Rohrkörpern her in seiner Innenfläche Kugelaufnahmeausnehmungen auf. In den Mantelkörper, den Sattelkörper und wenigstens teilweise in den Gehäusekörper ist eine Schließausnehmung eingebracht, in der ein Zylinderschloß mit einem Sicherheitskörper angeordnet ist. In einer Sperrstellung befindet sich das Zylinderschloß vollständig in der Schließausnehmung un die Kugeln halten ein erstes und ein letztes Glied einer Kette.

Nachteilig ist, daß auch ohne ein umständliches Herausziehen des Zylinderschlosses aus dem Gehäusekörper in einer Offen-stellung sich der Mantelkörper unter Gewaltanwendung so verdrehen läßt, daß die Kugelaufnahmeausnehmungen über die Ausnehmungen zu liegen kommen und die Kugeln das erste und das letzte Kettenglied freigeben und damit die Schloßvorrichtung geöffnet werden kann. Ein weiterer Nachteil besteht darin, daß sich Schloßvorrichtung nur unter Inanspruchnahme von Hilfsmitteln zusammenbauen läßt, da der Sattelkörper und die zwei Rohrkörper auf dem Gehäusekörper lagegenau gehalten werden müssen, damit der Mantelkörper herübergeschoben werden kann.

Eine Schloßvorrichtung ist auch aus der DE-A 4 017 122 bekannt. An einem Ende eines Schließkabels ist ein Steckerteil mit einer umlaufenden Nut befestigt. Am anderen Ende ist eine Schloßeinrichtung angeordnet. Die Schloßeinrichtung umfaßt eine Rasteinrichtung, bei der in einem Gehäuse ein glockenförmiger Haltekörper in Führungsdurchgängen Rastenkugeln aufnimmt. Durch eine Steuerfläche des Haltekörpers werden die Kugeln gehalten. Die Steuerfläche weist darüber hinaus Ausnehmungen auf, in die die Kugeln bei Verdrehen des Haltekörpers ausweichen können. Dem Haltekörper gegenüberliegend ist ein Schließwerk angeordnet, das gemeinsam von einem Gehäuse umgeben ist.

Diese Schloßvorrichtung hat sich bewährt. Allerdings muß das Gehäuse den speziellen Funktionsbedingungen angepaßt werden, so daß seine Herstellung kompliziert ist. Hinzu kommt, daß das Gehäuse sämtliche von den Schließkabelenden ausgehenden Kräfte aufnehmen muß. Erschwerend wirkt sich aus, daß die Kräfte im rechten Winkel zueinander auftreten. Damit die Enden des Schließkabels das Gehäuse nicht aufbiegen können, muß ein sehr formbeständiges Material eingesetzt werden, das dann allerdings die Formgebung selbst erschwert. Weiterhin werden auftretende Zugkräfte teilweise direkt auf das Schließwerk übertragen, so daß der daran befestigte Haltekörper abgerissen und das Schließwerk selbst beschädigt werden kann. Hierdurch ist die Schließsicherheit der Schließeinrichtung nicht mehr gewährleistet.

Weiterhin ist aus einem DE-Prospektblatt "EFZZ-Zubehör, 4.95" ein Motorradschloß bekannt, das eine Kette aufweist. Ein Ende der Kette ist mit einem Steckerteil und das andere mit einem Ring versehen. Eine Schließeinrichtung ist am Rahmen eines Zweirads angeordnet. In Schließstellung ist das mit dem Steckerteil versehene Ende der Kette durch den Ring gezogen und in der Schließeinrichtung gehalten.

Nachteilig ist hierbei, daß von dem Kettenende ausgehende Zugkräfte direkt auf die empfindliche Schließeinrichtung übertragen werden. Hierdurch können dessen Schließmechanismen beschädigt werden, so daß die Schließsicherheit des Motorradschlosses stark eingeschränkt ist. Ein angeschlossenes Zweirad kann durch die eingeschränkte Schließwirkung der Schließeinrichtung gestohlen oder durch ein Verklemmen der Schließeinrichtung nicht mehr aus der Anschließstellung befreit werden.

Es stellt sich demnach die Aufgabe, eine Schloßeinrichtung, insbesondere für Zweirad-Fahrzeuge der eingangs genannten Art so weiter zu entwickeln, daß die Schließvorgänge erleichtert werden, ein gewaltsames Öffnen bei einem Diebstahl erschwert wird und die Schloßeinrichtung einfacher herstellbar ist.

Erfindungsgemäß wird diese Aufgabe durch die Merkmale des Anspruchs 1 gelöst.

Die mit der Erfindung erzielten Vorteile bestehen insbesondere darin, daß es möglich ist, eine definierte Offen-Stellung oder eine definierte Geschlossen-Stellung einzuhalten, so daß der Schließvorgang selbst erleichtert wird. Durch die besondere Ausbildung des Schlosses ist ein "Knacken" des Schlosses nicht möglich. Ein weiterer Vorteil der zylindrisch ausgebildeten Teile der Schließeinrichtung besteht darin, daß sich die Schloßvorrichtung leichter zusammenbauen läßt, indem die einzelnen Teile nur ineinander und übereinander geschoben werden und entsprechend arretiert werden müssen.

Das Frontplattenelement kann gewölbt sein, wobei die Wölbung des Frontplattenelementes in die Schlüsselausnehmung des Hohlkörpers hineinragt.

Der Drehhohlkörper kann über ein Federelement mit einem Griffring verbunden sein. Dieser Griffring kann wiederum am Schließhohlkörper angeordnet sein. Hierdurch ist es möglich, den Drehhohlkörper gegenüber dem Schließhohlkörper so zu verdrehen, daß er von einer Drehendstellung wieder in eine definierte Ausgangsstellung zurückbewegt wird. Im Schließhohlkörper kann eine Plattenaufnahmeausnehmung und gegenüberliegend eine Schließausnehmung angeordnet sein. Darüber hinaus können eine wenigstens teilweise umlaufende Führungsausnehmung eingebracht und ein Stift angeordnet sein. Dadurch wird gewährleistet, daß der Schließhohlkörper definiert verstellt werden kann.

Ermöglicht werden können die definierten Offen- und Geschlossen-Stellungen dadurch, daß der Sicherheitskörper ein kreisförmig ausgebildeter Zwischenschließkörper ist, in dem auf einer Seite eine längliche Schließausnehmung angebracht ist und der auf der gegenüberliegender Seite in Längsrichtung der Schließausnehmung ein Schließkörperteilplanflächenelement aufweist, das in Querrichtung der Schließausnehmung in ein Schließkörperteilrundflächenelement übergeht. Mit Hilfe des Schließkörperteilplanflächenelements ist eine Geschlossen-Stellung des Schließzylinders gegeben. Das plan und eben verlaufende Schließkörperteilplanflächenelement kann in eine Ausnehmung einrasten und so den Schließzylinder in dieser Stellung unverrückbar festhalten, so daß die Schloßvorrichtung sicher abgeschlossen ist. Das sich daran anschließende gerundete Schließkörperteilrundflächenelement hingegen sorgt dafür, daß Schließhohlkörper und Drehhohlkörper gegeneinander verdrehbar sind und so die Ausziehbewegung des Steckerteils aus den Rastkörpern möglich ist.

Im Drehhohlkörper kann eine Stiftausnehmung angebracht sein, in die der Stift des Schließhohlkörpers drehwinkelbegrenzend bewegbar ist. Hierdurch wird erreicht, daß das Schließwerk von einem definierten gesperrten Zustand in einen definierten geöffneten Zustand durch ein Gegeneinanderverdrehen beider Hohlkörper gebracht werden kann.

Im Drehhohlkörper kann darüber hinaus ein Führungskörper gehalten sein, der in die Führungsausnehmung des Schließhohlkörpers hineinragt und ihr bewegbar ist. Hierdurch wird gesichert, daß bei einer Verdrehung des Drehhohlkörpers gegenüber dem Schließhohlkörper diese Bewegung nur auf eine radiale Bewegung begrenzt bleibt und eine Bewegung in Längsrichtung vermieden wird. Hierdurch wird gesichert, daß die Aufnahmeausnehmung und die Auflageausnehmung lage- und paßgerecht übereinander positionierbar sind, so daß bei einer Ausziehbewegung die Rastkörper in die freien Aufnahmeausnehmungen zurückgeschoben werden und so das Steckerteil freigegeben wird.

Vorteilhaft ist es, wenn das Federelement in einer ersten Federaufnahmeausnehmung im Drehhohlkörper und in einer zweiten Federaufnahmeausnehmung des Griffrings gehalten ist. Damit ist gewährleistet, daß bei einem Verdrehen der Hohlkörper gegeneinander das Federelement die Drehbewegung selbst nicht hemmen und ein einwandfreies Zurückbewegen beider Teile ermöglicht.

Der Drehhohlkörper ist kraftschlüssig mit einem Schloßaußenkörper verbunden. Der Schloßaußenkörper deckt wenigstens die durchgehende Aufnahmeausnehmung für die Rastkörper teilweise ab. Der Drehhohlkörper und der ihn umgebende Schloßaußenkörper bilden so den Verstellkörper aus. Der Schloßaußenkörper stellt die äußere Hülle der Schließeinrichtung dar. Er kann entweder aus einem sehr harten und festen Material hergestellt sein, der insbesondere den empfindlicheren und weicheren Schließhohlkörper und den
Drehhohlkörper vor äußeren Beschädigungen schützt. Andererseits ist es möglich, den Schloßaußenkörper aus einem elastischen Kunststoff herzustellen, der sich aufgrund seiner Elastizität eng an den Drehhohlkörper anschmiegt.

Ein Ausführungsbeispiel der Erfindung ist in der Zeichnung dargestellt und wird im folgenden näher beschrieben. Es zeigen:
- Fig. 1a: eine Schließvorrichtung als Mopedschloß in einer Anschlußstellung,
- Fig. 1b: eine Schließvorrichtung als Ringschloß in einer Anschlußstellung,
- Fig. 2: eine Schließvorrichtung als Mopedschloß in einer schematischen Schnittdarstellung,
- Fig. 3a: einen Schloßkörper eines Mopedschlosses gemäß Fig. 2 mit eingesetzten Schließspitzenelement und verankertem Schließkabel in einer Offen-Stellung in einer schematischen Schnittdarstellung,
- Fig. 3b: einen Schnitt durch einen Schloßkörper gemäß Fig. 3 entlang der Linie IIIB - IIIB,
- Fig. 3c: einen Schnitt durch einen verstellbaren Schließkörper gemäß Fig. 3a entlang der Ebene EIIIC-EIIIC
- Fig. 4: einen Schloßzylinder gemäß Fig. 3b in einer Geschlossen-Stellung in einer schematischen Schnittdarstellung,
- Fig. 5: einen Zwischenschließkörper eines Schloßkörpers gemäß den Fig. 3a bis 3c und Fig. 4 in einer schematischen Draufsicht,
- Fig. 6: einen Schnitt durch einen Zwischenschließkörper gemäß Fig. 5 entlang der Linie A-B,
- Fig. 7: einen Schnitt: durch einen Zwischenschließkörper gemäß Fig. 5 entlang der Linie C-D,
- Fig. 8: einen Schließhohlkörper eines Schließkörpers gemäß den Fig. 3a bis 3c und Fig. 4 in einer schematischen Schnittdarstellung,
- Fig. 9: einen Schnitt durch einen Schließhohlkörper gemäß Fig. 8 entlang der Linie IX - IX,
- Fig. 10: einen Schnitt durch einen Schließhohlkörper gemäß Fig. 8 entlang der Linie X - X,
- Fig. 11: einen Schnitt durch einen Schließhohlkörper gemäß Fig. 8 entlang der Linie XI - XI,
- Fig. 12: eine Draufsicht auf einen Schließhohlkörper gemäß Fig. 8 in einer schematischen Darstellung,
- Fig. 13: einen Drehhohlkörper eines Schloßkörpers gemäß den Fig. 3a bis 3c und Fig. 4 in einer schematischen Seitenansicht,
- Fig. 14: eine Draufsicht auf einen Drehhohlkörper gemäß Fig. 13 in einer schematischen Darstellung,
- Fig. 15: einen Schnitt durch einen Drehhohlkörper gemäß Fig. 13 entlang der Linie XV - XV,
- Fig. 16: einen Schnitt durch einen Drehhohlkörper gemäß Fig. 13 entlang der Linie XVI - XVI,
- Fig. 17: ein Detail X aus einem Drehhohlkörper gemäß Fig. 14,
- Fig. 18: einen Schnitt durch einen Drehhohlkörper gemäß Fig. 14 entlang der Linie XVIII - XVIII,
- Fig. 19: einen Griffring für einen Schloßkörper gemäß den Fig. 3a bis 3c und Fig. 4 in einer schematisch dargestellten Draufsicht,
- Fig. 20: einen Schnitt durch einen Griffring gemäß Fig. 19 entlang der Linie XX - XX,
- Fig. 21: einen Schnitt durch einen Griffring gemäß Fig. 19 entlang der Linie XXI - XXI und
- Fig. 22: ein Detail X aus einem Griffring gemäß Fig. 20.

Zweiräder erfreuen sich einer immer größeren Beliebtheit und bedürfen insbesondere einer großen Sicherheit gegen Diebstähle.

In Fig. la ist eine Schloßvorrichtung als Mopedschloß 100 dargestellt, das ein Moped 200 diebstahlgesichert mit einem Mast 300 verbindet.

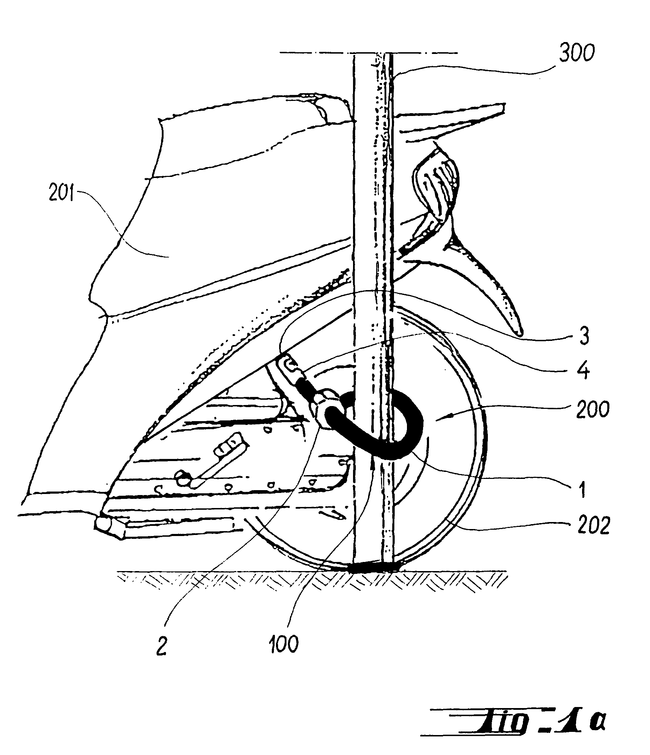

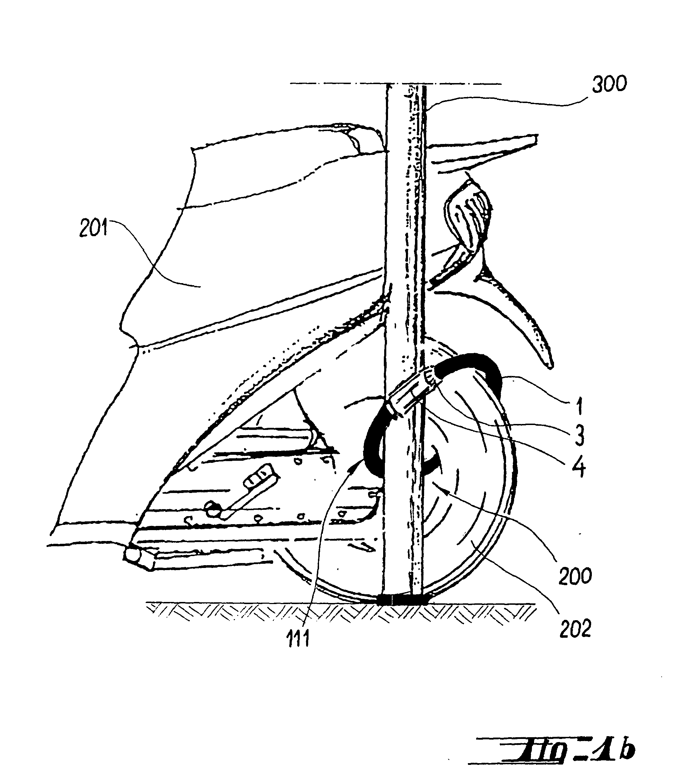

In Fig. 1b ist eine Schloßvorrichtung als Ringschloß 111 ausgebildet, das das Moped 200 gleichfalls diebstahlgesichert an den Mast 300 kettet.

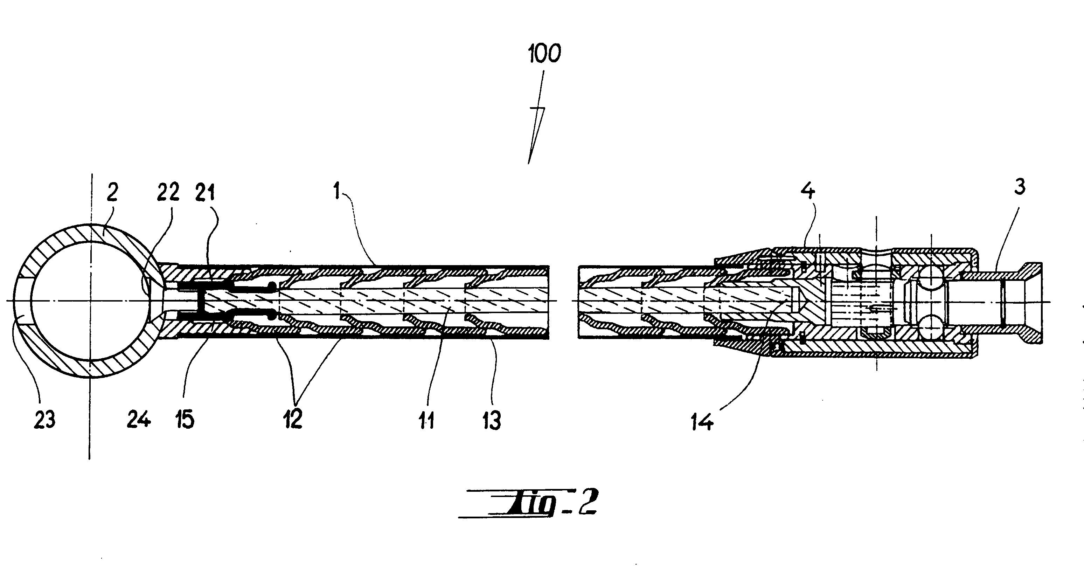

In Fig. 2 ist ein Mopedschloß 100 dargestellt.

Es besteht aus
- einem Schließkabel 1 mit seinen Schließkabelenden 14 und 15,
- einem Schließring 2, der am Schließkabelende 15 befestigt ist und
- einem Schloßkörper 4, der am Schließkabelende 15 angeordnet ist.

Der Schließring 2 weist: eine Montageöffnung 23 auf, durch die mit Hilfe eines Befestigungselements der Schließring an einem Klemmkörper 21 befestigt ist. Der Schließring 2 selbst hat einen solchen Innendurchmesser, daß der Schloßkörper 4 ungehindert durch ihn geführt werden kann.

Das Schließkabel 1 besteht aus einer Kabelseele 11, die von metallischen Gelenkkörpern 12 umgeben ist. Um die Gelenkkörper hüllt sich eine Kabelummantelung 13. Die Kabelummantelung kann als Silikon-Kautschukhülle ausgebildet sein. Sie kann so gestaltet sein, daß sie nicht nur eine abdichtende und schützende Funktion übernimmt, sondern darüber hinaus eine Vorspannung auf ein Schließspitzenelement 3 ausübt, das in den Schloßkörper 4 einführbar ist. Damit auftretende Zugkräfte, die von dem Schließring 2 auf das Schließkabel 1 übergehen, direkt aufgenommen werden können, ist der Klemmkörper 21 direkt mit der Kabelseele im Bereich des Schließkabelendes 15 verbunden. Damit auftretende Querbewegungen des Schließrings nicht auf die Gelenkkörper 12 übertragen werden können, ist der Klemmkörper 21 mit einem Befestigungskörper 24 umgeben, der wenigstens den ersten Klemmkörper 12 im Bereich des Schließkabelendes 15 erfaßt.

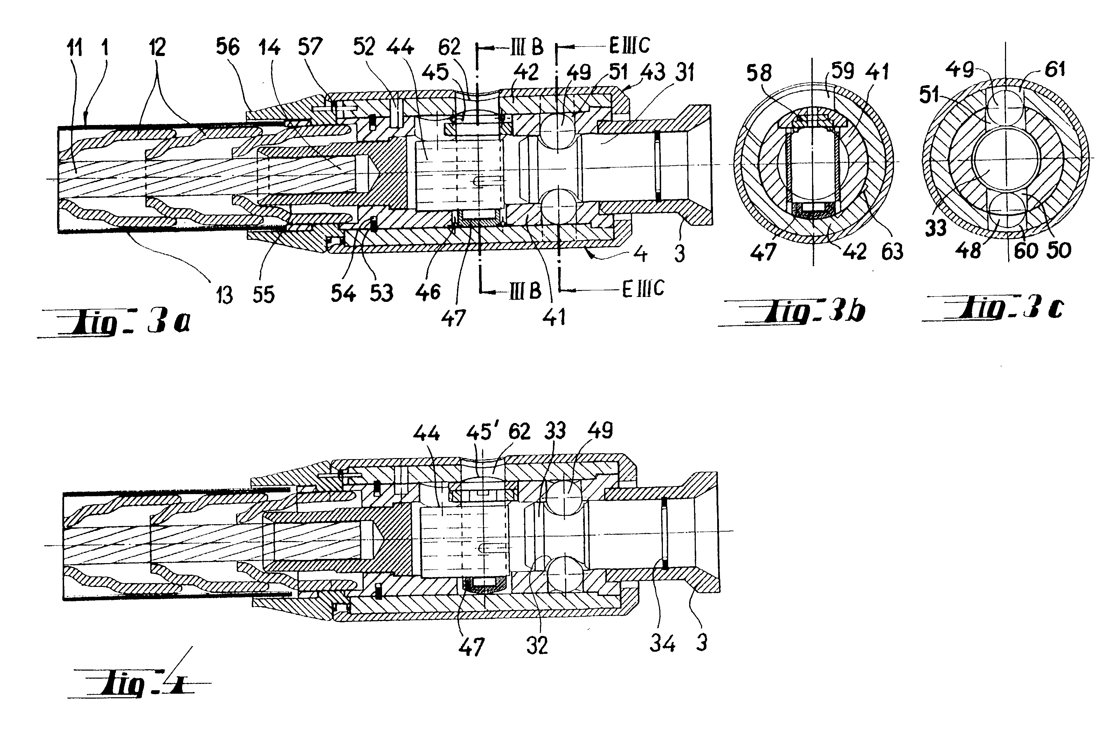

Der Schloßkörper 4 mit dem Schließkabelende 14 des Schließkabels 1 und dem Schließspitzenelement ist in Fig. 3a vergrößert dargestellt.

Der Schloßkörper 3 setzt sich aus
- einem Schließhohlkörper 41,
- einem Drehhohlkörper 42, der den Schließhohlkörper 41 umgibt, wobei beide gegeneinander verstellbar sind, und
- einem Schloßaußenkörper 43, der kraftschlüssig um den Drehhohlkörper 42 gelegt ist,
   zusammen.

An den Schließhohlkörper 41 und den Drehhohlkörper 42 grenzt ein Griffring 56.

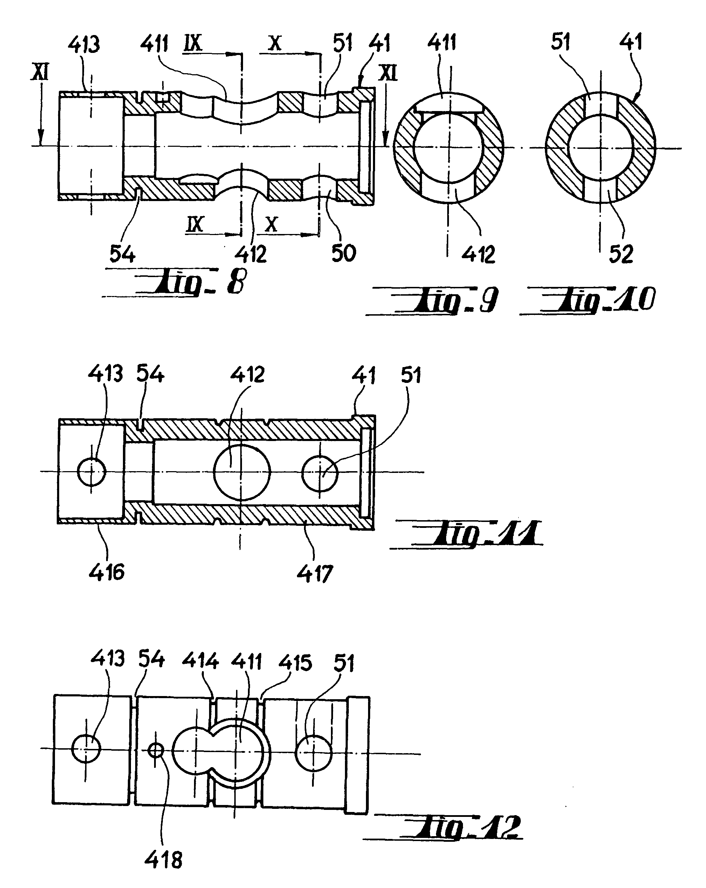

Der Schließhohlkörper 41 ist im Detail in den Fig. 8 bis 12 dargestellt.

Er besteht aus einem dünnwandigen Schließkabelpreßzylinder 416, der in einen dickwandigeren Schließfunktions-zylinder 417 übergeht.

Der Schließkabelpreßzylinder 416 hat einen solchen Innendurchmesser, daß das Schließkabel 1 allseitig umfaßt eingesteckt werden kann. Zur Arretierung des Schließkabel 1 ist eine Stiftausnehmung 413 vorgesehen.

Daran anschließend verengt sich der Innendurchmesser des Schließfunktionszylinders 417, um sich anschließend wieder zu erweitern. Hierdurch ist es möglich, daß ein hülsenförmiger Klemmkörper 55, der die Kabelseele 11 im Bereich des Schließkabelendes 15 kraftschlüssig umgibt, ebenfalls kraftschlüssig mit dem Schließhohlkörper 41 verbunden ist (vgl. Fig. 3a)

Im Schließfunktionszylinder 417 ist eine wenigstens teilweise umlaufende Führungsausnehmung 54 eingebracht. Daran anschließend befindet sich eine Plattenaufnahmeausnehmung 411 in Form zweier nebeneinanderliegender Bohrungen unterschiedlichen Durchmessers. Der größeren Teilbohrung der Plattenaufnahmeausnehmung 411 ist eine Schließaufnahmeausnehmung 412 gegenüberliegend eingebracht. Wie aus Fig. 3a ersichtlich ist, führen durch die Ausnehmungen 411 und 412 Teile eines Schließzylinders 44, der im Inneren des Schließhohlkörpers angeordnet ist. In der Plattenaufnahmeausnehmung 411 ist durchgängig ein Sicherheitselement 58 positioniert, während an den durchreichenden Halteelementen des Sicherheitselements 58 in der Schließausnehmung 412 ein Zwischenschließkörper 47 gehalten ist (vgl. Fig. 36).

Neben den Ausnehmungen 411 und 412 sind sich gegenüberliegend jeweils eine Auflageausnehmung 50 bzw. 51 angebracht. Ihr Innendurchmesser ist so groß, daß sie die Kugeln 48 bzw. 49 zwar aufnehmen, ein Hineinfallen aber in das Innere des Schließhohlkörpers 41 verhindern.

Die größere Bohrung der Plattenaufnahmeausnehmung 411 ist randseitig von zwei umlaufenden Ringaufnahmenuten 414 und 415 umgeben. In diese Nuten ist jeweils ein Ring 46 als Federelement mit: federnden und damit haltenden Eigenschaften eingelegt:. Neben der kleineren Bohrung der Plattenaufnahmeausnehmung 411 ist eine weitere Stiftaufnahmeausnehmung 418 eingebracht, in der ein Stift 52 festgehalten werden kann.

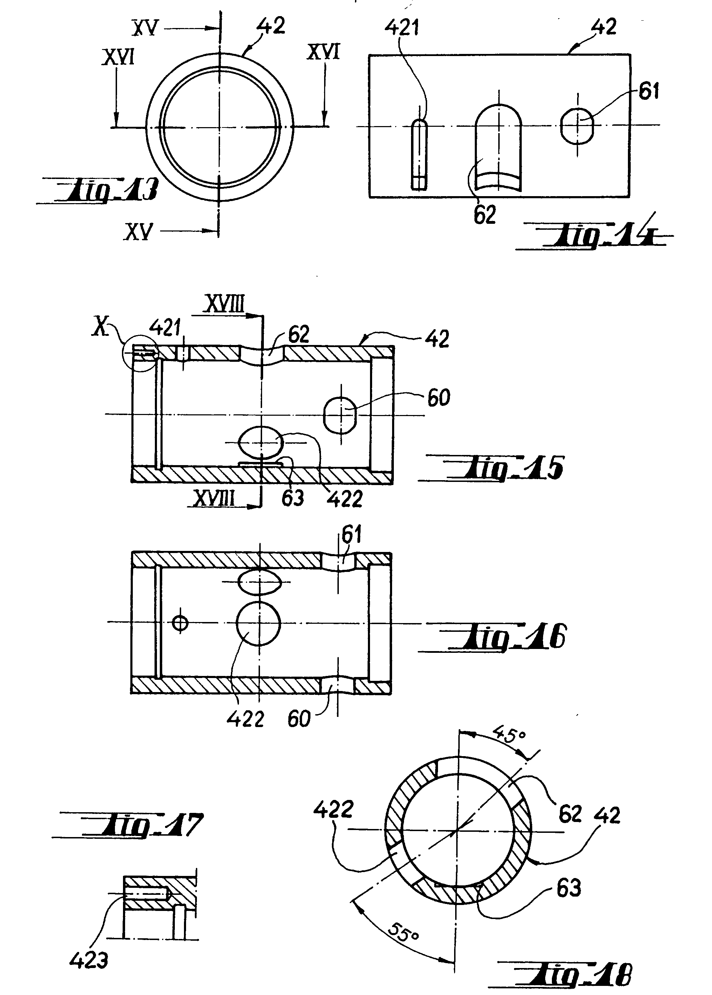

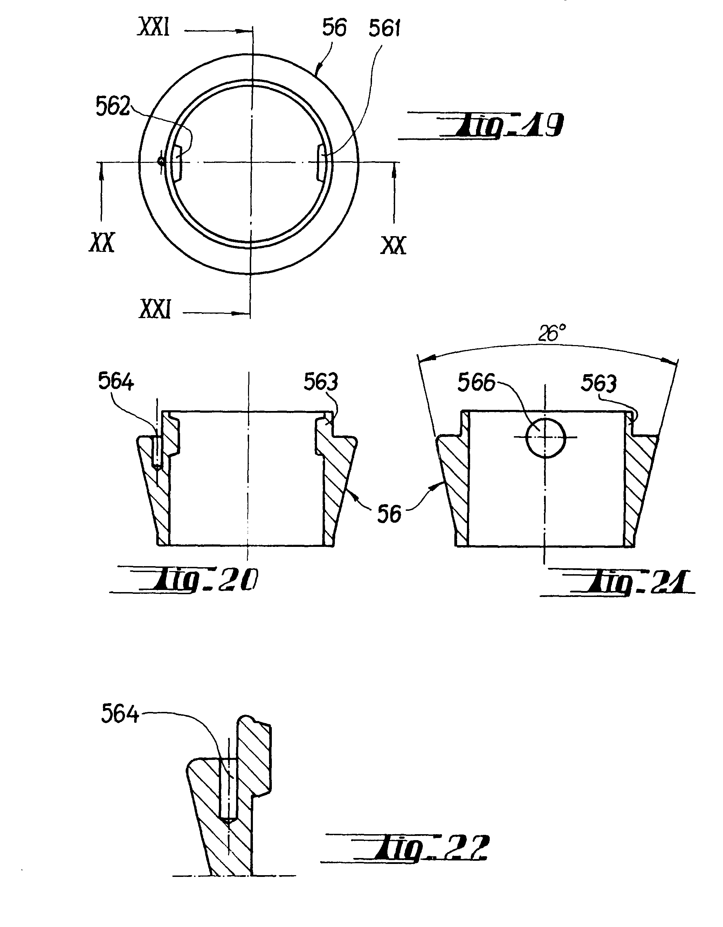

Der sich um den so ausgebildeten Schließhohlkörper 41 drehbare Drehhohlkörper 42 ist im Detail in den Fig. 13 bis 18 gezeigt.

In die Zylinderwandung ist durchgehend eine Stiftführungsausnehmung 421 eingebracht, in der sich der Stift 52 drehwinkelbegrenzend bewegen kann. Daneben ist eine Schließausnehmung 62 angeordnet. Sie ist als breiter Schlitz gestaltet, der von Halbrundungen begrenzt ist.

In die Schließausnehmung 62 ragt eine Wölbung 45' des Frontplattenelements 45 hinein, so daß bei einem Bewegen beider Hohlkörper 41 und 42 gegeneinander eine Führung vorhanden ist. Der Schließausnehmung 59 gegenüberliegend ist eine Zwischenkörperausnehmung 422 angeordnet. Sie weist einen solchen Durchmesser auf, daß durch sie der Zwischenschließkörper 47 bei der Montage hindurchgeführt werden kann. Damit beim Verdrehen des Drehhohlkörpers 42 der Zwischenschließkörper nicht herausfällt, ermöglicht nach der Montage die Schließausnehmung 62 eine Verdrehung um 45° und die Zwischenkörperausnehmung 422 von 55° gegenüber der Y-Achse des durch den Drehhohlkörper gezeichneten Koordinatensystems. Um die Zwischenkörperausnehmung 422 als Endlagestellung für den Zwischenschließkörper 47 einsetzen zu können, könnte diese im gleichen Winkel wie die Schließausnehmung 62, d. h. um 45° abgewinkelt eingebracht werden und nach dem Einführen des Zwischenschließkörpers 47 mit einem Teilzylinder verstöpselt werden. Eine weitere Rastvorrichtung für den Zwischenschließkörper 47 in Gestalt einer Zwischenschließkörperplanaufnahmeausnehmung 63 ist daneben eingebracht.

Wesentlich ist die Anordnung zweier sich gegenüberliegender Aufnahmeausnehmungen 60 bzw. 61. Sie weisen einen solchen Innendurchmesser auf, daß sie in der Lage sind, die Kugeln 48 bzw. 49 wenigstens teilweise aufzunehmen. In die Wandung des Drehhohlkörpers 42 ist darüber hinaus eine Federaufnahmeausnehmung 423 angebracht, in die das eine Ende eines als Schraubenfeder gestalteten Federelements 57 positioniert werden kann.

Um den so gestalteten Drehhohlkörper 42 ist ein Schloßaußenkörper 43 gelegt. Der Schloßaußenkörper 43 ist kraftschlüssig über den Drehhohlkörper 42 gelegt. Durch ihn ist lediglich eine Schlüsselausnehmung 62 geführt, die zur Schließausnehmung 59 kompatibel ist. Ansonsten überdeckt der Schloßaußenkörper sämtliche Ausnehmungen des unter ihm liegenden Drehhohlkörpers 42. Dadurch wird gesichert, daß die Kugeln 48 und 49 nicht aus den Aufnahmeausnehmungen 60 und 61 herausgedrückt werden können. Außerdem ist gesichert, daß der Stift 52 von außen unzugänglich bleibt und nur Führungsaufgaben hat. Führungsaufgaben in radialer Richtung übernehmen darüber hinaus Führungskörper 53, die in die Führungsausnehmungen 54 eingebracht sind.

Der Griffring 56 ist im Detail in den Fig. 19 bis 22 gezeigt. Er ist als teilkegelförmiger Hohlzylinder ausgebildet, der einen Aufringzylinder 563 enthält, auf dem der Schloßaußenkörper bei seinen Drehbewegungen aufliegt. Sich gegenüberliegende Hinterfassungsstiftelemente 561 und 562 sorgen für ein Hinterfassen bis zum Schließhohlkörper 41 bzw. festen Aufsitzen auf dem Schließkabel 1. Hierdurch wird gesichert, daß der Griffring 56 fest auf dem Schließkabel aufliegt. Eine Bohrung 566 sorgt dafür, daß eine feste Verklemmung möglich ist. An einer Seite weist der Griffring 56 eine Federaufnahmeausnehmung 564 auf, in die das andere Ende des als Schraubenfeder ausgestalteten Federelements 57 einsteckbar ist.

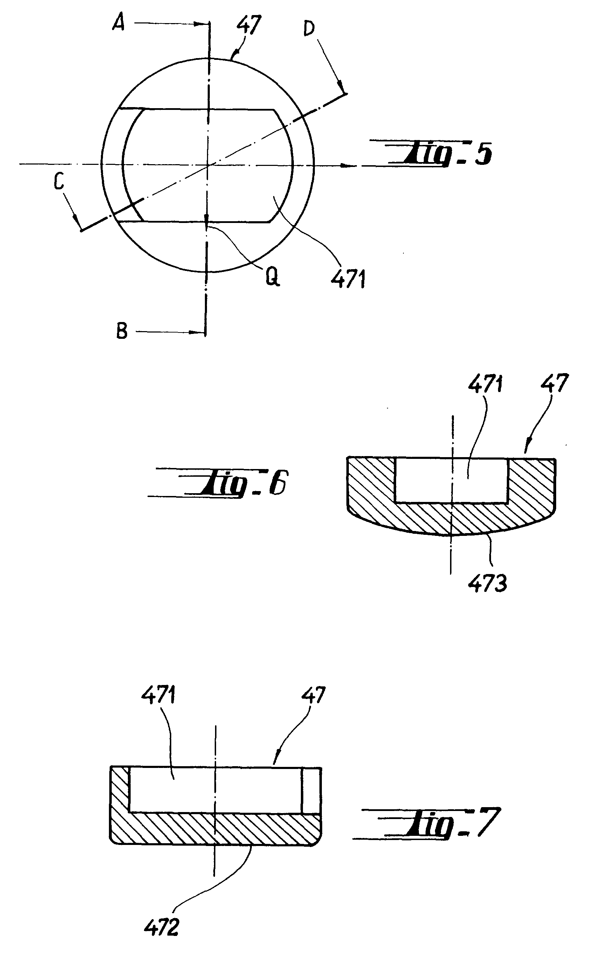

Das Schließspitzenelement 3 (vgl. Fig. 3a und 4) weist ein Spitzende 31 auf, in das eine wenigstens teilweise umlaufende Ringausnehmung 32 eingebracht ist. Neben der Ringausnehmung 32 ist eine Spitzenscheibe 33 angeordnet, die in Form eines Befestigungsrings 34 die Ringausnehmung 32 einseitig begrenzt.

Der bereits erwähnte Zwischenschließkörper 47 ist in den Fig. 5 bis 7 dargestellt. Er ist als Zylinderteilsegment ausgebildet. Auf der einen Seite weist er eine Schließausnehmung 471 auf, in die die Spitze eines Schlüssels oder eines anderen Schließelements einführbar ist. In Längsrichtung L ist an der gegenüberliegenden Seite ein Schließkörperteilplanflächenelement 472 ausgebildet. In Querrichtung Q hingegen geht diese in ein Schließkörperteilrundflächenelement 473 über. Das Schließkörperteilplanflächenelement 472 ist so ausgebildet, daß es kompatibel zu der bereits beschriebenen Zwischenschloßkörperplanaufnahmeausnehmung 63 ist.

Der Zusammenbau und die Funktionsweise der Schloßvorrichtung, wie sie sich aus dem dargestellten Ausführungsbeispiel ergibt, sei erläutert.

Der Klemmkörper 55 wird in den Schließhohlkörper 41 gesteckt. Anschließend wird das Schließkabel 1 eingeführt. Hierbei wird dessen Kabelseele 11 vom Klemmkörper 55 fest umschlossen, während die Ummantelung 13 vom Schließkabelpreßzylinder 416 umfaßt wird. Danach wird in den Schließhohlkörper 41 der Schließzylinder 44 mit dem dazugehörigen Frontplattenelement 45 und dem Zwischenschließkörper 47 sowie dem Sicherheitsement 58 eingesetzt.

Dann wird über das Schließkabel 1 der beschriebene Griffring 56 geschoben und entsprechend fest verklemmt. Die Montage des Griffrings kann selbstverständlich bereits vor dem Einführen des Schließkabels 1 in den Schließhohlkörper 41 mit dem darin befindlichen Klemmkörper 55 vorgenommen werden.

Über den montierten Schließhohlkörper 41 wird der Drehhohlkörper 42 geschoben und dabei die Aufnahmeausnehmung 60 und 61 über die Ausnehmungen 50 und 51 gestellt. Im gleichen Montagegang wird zwischen den Griffring 56 und den Drehhohlkörper das Federelement 57 installiert und in die entsprechenden Federaufnahmeausnehmungen eingesteckt. Ebenso werden die Führungskörper 53 in die Führungsausnehmungen 54 eingebracht, so daß der Drehhohlkörper 42 gegenüber dem Schließhohlkörper 41 nur noch radial verstellbar ist.

Danach wird der Stift 52 in die Stiftführungsausnehmung 421 eingesetzt. In die über den Auflageausnehmungen 50 bzw. 51 liegenden Aufnahmeausnehmungen 60 bzw. 61 werden die Kugeln 48 und 49 eingesteckt. Durch ein leichtes Verdrehen beider Körper 41 und 42 gegeneinander wird ein Herausfallen der Kugeln verhindert. Anschließend wird über den Drehhohlkörper 42 der Schloßaußenkörper 43 gezogen. Der Schloßaußenkörper 43 schließt einendig mit einem Ende des Griffrings ab, so daß ein gleichmäßig gestalteter durchgängiger Außenkörper entsteht. Durch das Einbringen von reibungserhöhenden Strukturen in Form von Riffelungen oder dergleichen ist ein Verdrehen der Einheit Drehhohlkörper / Schloßaußenkörper 43 gegeben.

Mit dem so im Detail beschriebenen Mopedschloß 100 sind folgende Schließendzustände möglich:

In den Fig. 3a und 3b ist der Schließzylinder 44 und damit der Zwischenschließkörper 47 in eine Offenstellung gebracht. Hierbei steht das Schließkörperteilflächenplattenelement 472 plan auf der Innenfläche des Drehhohlkörpers 42. Dadurch, daß das Schließhohlkörperteilrundflächenelement 473 der Innenrundung des Schließzylinders 44 folgen kann, lassen sich beide Hohlkörper 41 und 42, die Kraft des Federelements 57 überwindend in einen geöffneten Zustand zueinander führen (vgl. Fig. 3c). Bei einer entsprechenden Ausgestaltung der Zwischenkörperausnehmung 422 nach dem Einsetzen des Zwischenschloßkörpers 47 besteht die Möglichkeit, daß dieses Teil in die jetzt gestaltete Ausnehmung einrasten kann.

In dieser Stellung gelangen die Aufnahmeausnehmungen 60 und 61, wie bereits beschrieben, über die Auflageausnehmungen 50 bzw. 51. Bei einem Herausziehen des Spitzendes 31 des Schließspitzenelements 31 werden die Kugeln in die Aufnahmeausnehmungen 60 bzw. 61 gedrückt, so daß die Spitzenscheibe 33 durch die Kugeln hindurchgezogen werden kann und das Schließspitzenelement 3 freigegeben wird. Um die Anschließstellung des Mopedschloß 100 zu erreichen, wird wiederum das Schließspitzenelement 3 eingeführt. Die Spitzenscheibe 33 drückt durch ihre leichte Anschrägung die beiden Kugeln 48 und 49 in die Aufnahmeausnehmungen 60 und 61 zurück. Nachdem die Ringausnehmung 32 den Kugeln gegenübersteht, fallen diese in die Ringausnehmung ein.

Durch ein Lösen des Zwischenschließkörpers 47 aus der Zwischenkörperausnehmung 422 oder ein Loslassen des Drehhohlkörpers 42 bewegt das als Schraubenfeder gestaltete Federelement 57 den Drehhohlkörper 42 gegenüber dem Schließhohlkörper 41 in die Endstellung zurück. Beide Endstellungen werden durch den Stift 52 fixiert, der sich in der Stiftführungsausnehmung 421 vom Schloßaußenkörper 43 gehalten bewegen kann.

Durch ein Drehen des Schlüssels und damit ein Verdrehen des Zwischenschließkörpers 47 gelangt dessen Schließkörperteilplanflächenelement 472 in die Zwischenschließ-körperplanaufnahmeausnehmung 63 des Drehnonlkorpers 42 (vgl. Fig. 15 bei, 18). Hierdurch wird der Drehhohlkörper 42 gegenüber dem Schließhohlkörper 41 arretiert in einer Endstellung verriegelt. Wird nun auf das Schließspitzenelement 3 eine Ausziehbewegung A ausgeübt, halten die Kugeln 48 und 49 das Spitzende 31 fest. Der Befestigungsring 34, der in etwa dem Innendurchmesser des Schließhohlkörpers 41 entspricht, hintergreift die Kugeln 48 und 49 und gibt damit das Schließspitzenelement 3 nicht frei. Auftretende Zugkräfte werden dabei linear über den Schließhohlkörper 41 auf den in ihm gehaltenen Klemmkörper und damit auf die Kabelseele 11 des Schließkabels übertragen. Auf die drehbeweglichen Teile des Schloßkörpers 4, wie den Drehhohlkörper 42, den Schloßaußenkörper 43 und den Schließzylinder 44 mit seinem empfindlichen Teilen wirken diese Kräfte nicht. Hierdurch wird erreicht, daß der Schloßkörper seine Sicherheitsfunktion ständig erfüllen kann.

Bei der in Fig. 1a gezeigten Anschlußstellung des Mopedschloß 100 ist das Schließspitzenelement am Mopedrahmenteil 201 des Mopeds 200 befestigt. Beim Schließvorgang wird das Schließkabel um den Mast 300 gelegt, der Schloßkörper 4 durch den Schließring 4 geführt und auf das Schließspitzenelement 2 gesteckt. Durch die besondere Ausbildung des Mopedschlosses, insbesondere des Schloßkörpers 4 ist ein "Knacken" des Mopedschlosses 100 durch eine Zugeinwirkung nicht möglich.

In Fig. 1b hingegen ist das Schließspitzenelement 3 anstatt des Schließrings 2 an dem Schließkabelende 15 befestigt. In diesem Fall wird um ein Hinterrad 202 und um den Mast 300 das Ringschloß gelegt und durch Einführen des Schließspitzenelements 3 in den Schloßkörper 4 die Anschlußstellung hergestellt.

### Bezugszeichenliste

- 1: Schließkabel
- 2: Schließring
- 3: Schließspitzenelement
- 4: Schloßkörper
- 11: Kabelseele
- 12: Gelenkkörper
- 13: Ummantelung
- 14, 15: Schließkabelende
- 21: Klemmkörper
- 22: Befestigungselement
- 23: Montageöffnung
- 24: Befestigungskörper
- 31: Spitzende
- 32: Ringausnehmung
- 33: Spitzenscheibe
- 34: Befestigungsring
- 41: Schließhohlkörper
- 42: Drehhohlkörper
- 43: Schloßaußenkörper
- 44: Schließzylinder
- 45: Frontplattenelement
- 45': Wölbung
- 46: Ring
- 47: Zwischenschließkörper
- 48, 49: Kugel
- 50, 51: Auflageausnehmung
- 52: Stift
- 53: Führungskörper
- 54: Führungsausnehmung
- 55: Klemmkörper
- 56: Griffring
- 57: Federelement
- 58: Sicherheitsplattenstegelement
- 59: Schließausnehmung
- 60, 61: Aufnahmeausnehmung
- 62: Schloßausnehmung
- 63: Zwischenschließkörperplanaufnahmeausnehmung
- 100: Mopedschloß
- 111: Ringschloß
- 200: Moped
- 201: Mopedrahmenteil
- 202: Hinterrad
- 300: Mast
- 411: Plattenaufnahmeausnehmung
- 412: Schließaufnahmeausnehmung
- 413: Stiftaufnahmeausnehmung
- 414, 415: Ringaufnahmenut
- 416: Schließkabelpreßzylinder
- 417: Schließfunktionszylinder
- 418: Stiftausnehmung
- 421: Stiftausnehmung
- 422: Zwischenkörperausnehmung
- 423: Federaufnahmeausnehmung
- 471: Schließausnehmung
- 472: Schließkörperteilplattenflächenelement
- 473: Schließkörperteilrundflächenelement
- 561, 562: Hinterfassungsstiftelement
- 563: Aufringzylinder
- 564: Federaufnahmeausnehmung
- 566: Bohrung
- A: Ausziehbewegung
- L: Längsrichtung
- Q: Querrichtung

## Patentansprüche

1. Schloßvorrichtung, insbesondere für Zweirad-Fahrzeuge, aufweisend
- ein abschließbares Schließkabel (1),
- eine Anschlußeinheit (3) mit einem Steckerteil (31), in das eine Ausnehmung (32) eingebracht ist,
- einen Schloßkörper (4) mit einer verstellbaren Rasteinrichtung (41, 42, 43), durch die wenigstens ein sphärisch ausgebildeter Rastkörper (48, 49), der in der Ausnehmung (32) des Steckerteils (31) angeordnet ist, festlegbar oder freigebbar ist,
- welche Rasteinrichtung einen zylinderförmig ausgebildeten Schließhohlkörper (41) und einen den Schließhohlkörper (41) wenigstens teilweise umgebenden Verstellkörper, der aus wenigstens einem Drehhohlkörper (42) besteht, aufweist,
- wobei der Schließhohlkörper (41) an einem Ende mit einem ersten Schließkabelende (14) des Schließkabels (1) verbunden ist, am entgegengesetzten Ende mit wenigstens einer Auflageausnehmung (50, 51) versehen ist, die den sphärisch ausgebildeten Rastkörper (48, 49) wenigstens teilweise hält,
- ein Schließwerk (44, 45, 47) mit Schließzylinder (44) zwischen den Enden des Schließhohlkörpers (41),
- wenigstens eine Aufnahmeausnehmung (60, 61) im Drehhohlkörper (42),
- wobei der Drehhohlkörper (42) und der Schließhohlkörper (41) zueinander so verstellbar sind, daß die Aufnahmeausnehmung (60, 61) über der Auflageausnehmung (50, 51) positionierbar ist, so daß bei einer Ausziehbewegung (A) des Steckerteils (31) der Rastkörper (48, 49) das Steckerteil freigibt oder daß die Aufnahmeausnehmung (60, 61) und die Auflageausnehmung (50, 51) zueinander versetzbar sind, so daß durch den Rastkörper (48, 49) das Steckerteil im Schließhohlkörper (41) gehalten ist, und
- wobei der Schließzylinder (44) mit einem durch einen eingeführten Schlüssel beweglichen, einem Frontplattenelement (45) des Schließzylinders gegenüberliegenden Sicherheitskörper (47) ausgestattet ist,
dadurch gekennzeichnet, daß die Ausnehmung des Steckerteils (31) eine wenigstens teilweise umlaufende Ringausnehmung (32) ist und daß der Sicherheitskörper (47) zwischen eine das Verstellen des Drehhohlkörpers (42) und des Schließhohlkörpers (41) zueinander erlaubende Offenstellung und eine der Drehhohlkörper (42) gegenüber dem Schließhohlkörper (41) arretiert verriegelnde Sperrstellung durch den eingeführten Schlüssel verdrehbar ist, wobei sowohl in der Offenstellung als auch in der Sperrstellung das Frontplattenelement (45) in einer Plattenaufnahmeausnehmung (411) des Schließhohlkörpers (41) und der Sicherheitskörper (47) in einer Schließausnehmung (412) des Schließhohlkörpers (41) gehalten sind.

2. Schloßvorrichtung nach Anspruch 1, dadurch gekennzeichnet, daß das Frontplattenelement (45) gewölbt ist und die Wölbung (45') des Frontplattenelements (45) in die Schließausnehmung (59) des Drehhohlkörpers (42) hineinragt.

3. Schloßvorrichtung nach Anspruch 1 oder 2, dadurch gekennzeichnet, daß der Drehhohlkörper (42) über ein Federelement (57) mit einem Griffring (56) verbunden ist und daß der Griffring (56) am Schließhohlkörper (41) angeordnet ist.

4. Schloßvorrichtung nach einem der Ansprüche 1 bis 3, dadurch gekennzeichnet, daß im Schließhohlkörper (41) eine wenigstens teilweise umlaufende Führungsausnehmung (54) angebracht ist.

5. Schloßvorrichtung nach einem der Ansprüche 1 bis 4, dadurch gekennzeichnet, daß im Schließhohlkörper (41) ein Stift (52) angeordnet ist.

6. Schloßvorrichtung nach einem der Ansprüche 1 bis 5 dadurch gekennzeichnet, daß im Drehhohlkörper (42) eine Schließausnehmung (59) und in dem darüberliegenden Schloßaußenkörper (43) eine Schlüsselausnehmung (62) angeordnet ist.

7. Schloßvorrichtung nach einem der Ansprüche 1 bis 6, dadurch gekennzeichnet, daß der Sicherheitskörper ein kreisförmig ausgebildeter Zwischenschließkörper (47) ist, in den auf einer Seite eine längliche Schließausnehmung (471) angebracht ist und der auf der Gegenseite in Längsrichtung (L) der Schließausnehmung (471) ein Schließkörperteilplanflächenelement (472) aufweist, das in Querrichtung (Q) der Schließausnehmung (471) in ein Schließkörperteilrundflächenelement (473) übergeht.

8. Schloßvorrichtung nach einem der Ansprüche 1 bis 7, dadurch gekennzeichnet, daß im Drehhohlkörper (42) eine Stiftausnehmung (421) angebracht ist, in der der Stift (52) des Schließhohlkörpers (41) drehwinkelbegrenzend bewegbar ist.

9. Schloßvorrichtung nach einem der Ansprüche 1 bis 8, dadurch gekennzeichnet, daß im Drehhohlkörper (42) ein Führungskörper (53) gehalten ist, der in die Führungsausnehmung (54) des Schließhohlkörpers (41) hineinragt und ihr bewegbar ist.

10. Schloßvorrichtung nach einem der Ansprüche 1 bis 9, dadurch gekennzeichnet, daß das Federelement (57) in einer ersten Federaufnahmeausnehmung (423) im Drehhohlkörper (42) und in einer zweiten Federaufnahmeausnehmung (564) des Griffrings (56) gehalten ist.

11. Schloßvorrichtung nach einem der Ansprüche 1 bis 10, dadurch gekennzeichnet, daß den Drehhohlkörper kraftschlüssig ein Schloßaußenkörper (43), der wenigstens die durchgehende Aufnahmeausnehmung (60, 61) abdeckt, wenigstens teilweise umgibt.

## Claims

1. A locking device, particularly for two-wheeled vehicles comprising
- a lockable locking cable (1),
- a connecting unit (3) comprising a plug part (31) in which a recess (32) is formed,
- a locking member (4) comprising an adjustable catch device (41, 42, 43) for securing or releasing at least one spherical catch member (48, 49) disposed in the recess (32) in the plug part (31),
- the catch device comprising a cylindrical hollow locking member (41) and an adjusting member which at least partly surrounds the hollow locking member (41) and comprises at least one rotary hollow member (42),
- wherein the hollow locking member (41) is connected at one end to a first end (14) of the locking cable (1), whereas the opposite end has at least one support recess (50, 51) which at least partly holds the spherical catch member (48, 49),
- a locking mechanism (44, 45, 47) comprising a lock cylinder (44) between the ends of the hollow locking member (41),
- at least one holding recess (60, 61) in the rotary hollow member (42),
- wherein the rotary hollow member (42) and the hollow locking member (41) are adjustable relative to one another so that the holding recess (60, 61) can be positioned over the support recess (50, 51) so that when a movement
(A) is made for pulling out the plug part (31), the catch member (48, 49) releases the plug part or the holding recess (60, 61) and the support recess (50, 51) can be offset relative to one another so that the catch member (48, 49) holds the plug part in the hollow locking member (41), and
- wherein the locking cylinder (44) is provided with a safety member (47) movable by an inserted key and disposed opposite a frontplate element (45) of the locking cylinder,
characterised in that the recess in the plug part (31) is an annular recess (32) extending at least partly around the periphery, and in that the safety member (47) can be rotated by the inserted key between an open position allowing the rotary hollow member (42) to be adjusted relative to the hollow locking member (41) and a barred or locking position wherein the rotary hollow member (42) is secured relative to the hollow locking member (41), and both in the open position and in the barred position the front plate element (45) is held in a plate-receiving recess (411) in the hollow locking member (41) and the safety member (47) is held in a locking recess (412) in the hollow locking member (41).

2. A locking device according to claim 1,
characterised in that the front plate element (45) is curved and the curvature (45') of the front plate element (45) extends into the locking recess (59) in the rotary hollow member (42).

3. A locking device according to claim 1 or 2,
characterised in that the rotary hollow member (42) is connected via a spring element (57) to a handle ring (56), and the handle ring (56) is disposed on the hollow locking member (41).

4. A locking device according to any of claims 1 to 3, characterised in that a guide recess (54) extending at least partly around the periphery is formed in the hollow locking member (41).

5. A locking device according to any of claims 1 to 4, characterised in that a pin (52) is disposed in the hollow locking member (41).

6. A locking device according to any of claims 1 to 5, characterised in that a locking recess (59) is formed in the rotary hollow member (42) and a key recess (62) is formed in the outer locking member (43) thereabove.

7. A locking device according to any of claims 1 to 6, characterised in that the safety member is a circular intermediate locking member (47) formed on one side with an elongate locking recess (471) whereas on the other side in the longitudinal direction (L) of the locking recess (471) there is a flat surface element (472) of the locking member which merges in the transverse direction (Q) of the locking recess (471) into a round surface element (473) of the locking member.

8. A locking device according to any of claims 1 to 7, characterised in that the rotary hollow member (42) is formed with a recess (421) in which the pin (52) of the hollow locking member (51) is movable so as to define the angle of rotation.

9. A locking device according to any of claims 1 to 8, characterised in that a guide member (53) is held in the rotary hollow member (42) and projects into the guide recess (54) in the hollow locking member (41) and is movable therein.

10. A locking device according to any of claims 1 to 9, characterised in that the spring element (51) is held in a first spring-receiving recess (423) in the rotary hollow member (42) and in a second spring-receiving recess (584) in the handle ring (56).

11. A locking device according to any of claims 1 to 10, characterised in that an outer locking member (43) which at least covers the through-extending holding recess (60, 61), at least partly and non-positively surrounds the rotary hollow member.

## Revendications

1. Dispositif de verrouillage, en particulier pour véhicule à deux roues, comprenant
un câble de fermeture (1) qui peut être verrouillé,
une unité de raccord (3) qui inclut un élément enfichable (31) dans lequel est ménagé un évidement (32),
un corps (4) de cadenas qui inclut un dispositif d'encliquetage réglable (41, 42, 43), au moyen duquel au moins un corps d'encliquetage (48, 49) de configuration sphérique qui est agencé dans l'évidement (32) de l'élément enfichable (31), peut être attaché ou dégagé,
ce dispositif d'encliquetage comportant au moins un corps creux de fermeture (41) de configuration cylindrique et un corps mobile qui se compose d'au moins un corps creux rotatif (42) et entoure au moins en partie le corps creux de fermeture (41) et,
le corps creux de fermeture (41) étant connecté par l'une de ses extrémités à une extrémité (14) de câble de fermeture du câble de fermeture (1) et comportant à l'extrémité opposée au moins un évidement d'appui (50, 51) qui tient au moins en partie le corps d'encliquetage (48, 49) de configuration sphérique,
un mécanisme de fermeture (44, 45, 47) qui inclut un barillet (44) entre les extrémités du corps creux de fermeture (41),
au moins un évidement de réception (60, 61) ménagé dans le corps creux rotatif (42),
le corps creux rotatif (42) et le corps creux de fermeture (41) étant mobiles l'un par rapport à l'autre d'une façon telle que, soit l'évidement de réception (60, 61) peut être positionné au-dessus de l'évidement d'appui (50, 51) afin que le corps d'encliquetage (48, 49) libère l'élément enfichable lors d'un déplacement d'extraction (A) de l'élément enfichable (31), soit l'évidement de réception (60, 61) et l'évidement d'appui (50, 51) peuvent être décalés l'un par rapport l'autre afin que l'élément enfichable soit tenu dans le corps creux de fermeture (41) par le corps d'encliquetage (48, 49), et
le barillet (44) comportant un corps de sécurité (47), mobile sous l'effet d'un clé introduite, et opposé à un élément de plaque frontale (45) du barillet,
caractérisé en ce que l'évidement de l'élément enfichable (31) est un évidement annulaire (32) ménagé sur au moins une partie de sa périphérie, en ce que le corps de sécurité (47) peut pivoter sous l'effet de la clé introduite entre une position d'ouverture qui permet un déplacement du corps creux rotatif (42) et du corps creux de fermeture (41) l'un par rapport à l'autre et une position de fermeture qui verrouille de façon bloquée le corps creux rotatif (42) par rapport au corps creux de fermeture (41), et en ce que, tant dans la position d'ouverture que dans la position de fermeture, l'élément de plaque frontale (45) est tenu dans un évidement de réception (411) de plaque du corps creux de fermeture (41) et le corps de sécurité (47) est tenu dans un évidement de fermeture (412) du corps creux de fermeture (41).

2. Dispositif de verrouillage selon la revendication 1, caractérisé en ce que l'élément de plaque frontale (45) est bombé et le bombement (45') de l'élément de plaque frontale (45) fait saillie dans l'évidement de fermeture (59) du corps creux rotatif (42).

3. Dispositif de verrouillage selon la revendication 1 ou 2, caractérisé en ce que le corps creux rotatif (42) est connecté à une bague de saisie (56) par l'intermédiaire d'un élément élastique (57) et en ce que la bague de saisie (56) est agencée sur le corps creux de fermeture (41).

4. Dispositif de verrouillage selon l'une quelconque des revendications 1 à 3, caractérisé en ce qu'un évidement de guidage (54) est ménagé dans le corps creux de fermeture (41) sur au moins une partie de sa périphérie.

5. Dispositif de verrouillage selon l'une quelconque des revendications 1 à 4, caractérisé en ce qu'une tige (52) est agencée dans le corps creux de fermeture (41).

6. Dispositif de verrouillage selon l'une quelconque des revendications 1 à 5 caractérisé en ce qu'un évidement de fermeture (59) est ménagé dans le corps creux rotatif (42) et un évidement (62) de clé est ménagé dans le corps extérieur (43) de cadenas qui lui est superposé.

7. Dispositif de verrouillage selon l'une quelconque des revendications 1 à 6, caractérisé en ce que le corps de sécurité est un corps de fermeture intermédiaire (47) de configuration circulaire dans lequel un évidement longitudinal de fermeture (471) est ménagé sur l'un des côtés et qui comporte sur le côté opposé, dans la direction longitudinale (L) de l'évidement de fermeture (471), un élément (472) à surface plane de corps de fermeture qui se raccorde en direction transversale (Q) de l'évidement de fermeture (471) dans un élément (473) à surface ronde du corps de fermeture.

8. Dispositif de verrouillage selon l'une quelconque des revendications 1 à 7, caractérisé en ce qu'un évidement (421) de tige, dans lequel la tige (52) du corps creux de fermeture (41) est mobile à rotation angulaire limitée, est ménagé dans le corps creux rotatif (42).

9. Dispositif de verrouillage selon l'une quelconque des revendications 1 à 8, caractérisé en ce qu'un corps de guidage (53), qui fait saillie dans l'évidement de guidage (54) du corps creux de fermeture (41) et y est mobile, est tenu dans le corps creux rotatif (42).

10. Dispositif de verrouillage selon l'une quelconque des revendications 1 à 9, caractérisé en ce que l'élément élastique (57) est tenu dans un premier évidement de réception (423) de ressort, ménagé dans le corps creux rotatif (42), et est tenu dans un deuxième évidement de réception (564) de ressort, ménagé dans la bague de saisie (56).

11. Dispositif de verrouillage selon l'une quelconque des revendications 1 à 10, caractérisé en ce que le corps creux rotatif (42) entoure au moins en partie en engagement à force un corps extérieur (43) de cadenas qui recouvre au moins l'évidement traversant de réception (60, 61).
